# EUROPEAN PATENT APPLICATION

(11) **EP 4 817 928 A1**
(43) Date of publication of application: **07.10.2026**
(21) Application number: 24895459.6
(22) Date of filing: 22.05.2024
(51) Int. Cl.: B60L 1/00, B60L 58/18, B60L 3/00

(54) **VEHICLE POWER SUPPLY METHOD AND SYSTEM, ELECTRONIC DEVICE, VEHICLE CONTROL SYSTEM, AND VEHICLE**

(30) Priority: 30.11.2023 CN 202311655845
(71) Applicant: BYD Company Limited, Shenzhen, Guangdong 518118 (CN)
(72) Inventor: LING, Heping, Shenzhen, Guangdong 518118 (CN); YAN, Lei, Shenzhen, Guangdong 518118 (CN); YIN, Deqian, Shenzhen, Guangdong 518118 (CN); YUAN, Shuai, Shenzhen, Guangdong 518118 (CN); WU, Liucheng, Shenzhen, Guangdong 518118 (CN)
(74) Representative: Mathys & Squire
(86) International application number: PCT/CN2024/094732
(87) International publication number: WO 2025/112349

(57) **Abstract**

Disclosed is a power supply system. The power supply system includes a first load, a second load, a first battery pack, a second battery pack, and a bidirectional voltage converter. The first load is connected to the first battery pack; and the second load is connected to the second battery pack. The bidirectional voltage converter is respectively connected to the first battery pack and the second battery pack. The first battery pack is configured to supply power to the first load; and the second battery pack is configured to supply power to the second load. The bidirectional voltage converter is configured to control energy transmission between the first battery pack and the second battery pack. The vehicle may be powered by using the two battery packs, and energy transmission may be further performed between the two battery packs, so that the vehicle has sufficient energy and strong power output, meeting the user requirements on the endurance range and the drive capability.

## Description

### CROSS-REFERENCE TO RELATED APPLICATIONS

The present disclosure claims priority to Chinese Patent Application No. 202311655845.X, filed with the China National Intellectual Property Administration on November 30, 2023 and entitled "POWER SUPPLY METHOD AND POWER SUPPLY SYSTEM OF VEHICLE, ELECTRONIC APPARATUS, CONTROL SYSTEM, AND VEHICLE", which is incorporated herein by reference in its entirety.

### TECHNICAL FIELD

The present disclosure relates to the field of vehicle control technologies, and specifically, to a power supply method and a power supply system for a vehicle, an electronic apparatus, a control system, and a vehicle.

### BACKGROUND

With the development of vehicle technologies, people have higher requirements on vehicle driving experience. In one aspect, people desire a vehicle with a long endurance range. In another aspect, people desire strong drive performance of the vehicle. More importantly, people expect the vehicle to maintain optimal performance in all weather conditions.

To resolve the foregoing problems, the power battery of the vehicle needs to have high energy density, to provide more energy for the vehicle with the same volume. In addition, the power battery of the vehicle needs to have high power density, to provide strong power output in a short period of time.

### SUMMARY

An objective of the present disclosure is to provide a power supply method and a power supply system for a vehicle, an electronic apparatus, a control system, and a vehicle, to improve work efficiency of a battery pack for a vehicle.

To achieve the foregoing objective, according to a first aspect, the present disclosure provides a power supply system for a vehicle. The power supply system includes a first load, a second load, a first battery pack, a second battery pack, and a bidirectional voltage converter. The first load is connected to the first battery pack; and the second load is connected to the second battery pack. The bidirectional voltage converter is respectively connected to the first battery pack and the second battery pack.

The first battery pack is configured to supply power to the first load; and the second battery pack is configured to supply power to the second load.

The bidirectional voltage converter is configured to control energy transmission between the first battery pack and the second battery pack.

Optionally, the bidirectional voltage converter is configured to:
when a first state of charge of the first battery pack is located within a first preset range, and a second state of charge of the second battery pack is located within a second preset range, enable the first battery pack and the second battery pack to perform energy transmission in a first energy transmission direction; or
when the first state of charge of the first battery pack is located within a third preset range, and the second state of charge of the second battery pack is located within a fourth preset range, enable the first battery pack and the second battery pack to perform energy transmission in a second energy transmission direction.

Optionally, the first energy transmission direction is a direction in which the first battery pack transmits energy to the second battery pack; and the second energy transmission direction is a direction in which the second battery pack transmits energy to the first battery pack.

Optionally, the bidirectional voltage converter is configured to:
when a first state of charge of the first battery pack is located within a fifth preset range, and a second state of charge of the second battery pack is located within a sixth preset range, reduce energy output of the first battery pack and/or the second battery pack.

Optionally, the first preset range of the first state of charge of the first battery pack is greater than the third preset range of the first state of charge of the first battery pack; and the third preset range of the first state of charge of the first battery pack is greater than the fifth preset range of the first state of charge of the first battery pack; and
the sixth preset range of the second state of charge of the second battery pack is less than the second preset range and the fourth preset range of the second state of charge of the second battery pack.

Optionally, the first preset range includes one or more of the following: greater than or equal to 20%, greater than or equal to 10% and less than 20%, and greater than or equal to 5% and less than 10%;
the third preset range includes one or more of the following: greater than or equal to 5% and less than 10%, greater than or equal to 2% and less than 5%, and less than 2%;
the fifth preset range includes less than 2%; and
the sixth preset range includes less than 10%.

Optionally, the power supply system further includes a first precharge circuit; and the first precharge circuit is connected to both the first battery pack and the first load; and
the first precharge circuit is configured to precharge the first load; and/or
the power supply system further includes a second precharge circuit; and the second precharge circuit is connected to both the second battery pack and the second load; and
the second precharge circuit is configured to precharge the second load.

Optionally, the second load is a power system of the vehicle.

According to a second aspect, the present disclosure provides a power supply method of a vehicle, applied to a power supply system of the vehicle. The system includes a first load, a second load, a first battery pack, a second battery pack, and a bidirectional voltage converter. The first load is connected to the first battery pack; and the second load is connected to the second battery pack. The bidirectional voltage converter is respectively connected to the first battery pack and the second battery pack. The method includes:
controlling energy transmission between the first battery pack and the second battery pack based on a first state of charge of the first battery pack and a second state of charge of the second battery pack via the bidirectional voltage converter, where the first battery pack is configured to supply power to the first load, and the second battery pack is configured to supply power to the second load.

Optionally, the controlling energy transmission between the first battery pack and the second battery pack via the bidirectional voltage converter includes:
when a first state of charge of the first battery pack is located within a first preset range, and a second state of charge of the second battery pack is located within a second preset range, enabling, by using the bidirectional voltage converter, the first battery pack and the second battery pack to perform energy transmission in a first energy transmission direction; or
when the first state of charge of the first battery pack is located within a third preset range, and the second state of charge of the second battery pack is located within a fourth preset range, enable the first battery pack and the second battery pack to perform energy transmission in a second energy transmission direction.

Optionally, the first energy transmission direction is a direction in which the first battery pack transmits energy to the second battery pack; and the second energy transmission direction is a direction in which the second battery pack transmits energy to the first battery pack.

Optionally, the controlling energy transmission between the first battery pack and the second battery pack via the bidirectional voltage converter includes:

When a first state of charge of the first battery pack is located within a fifth preset range, and a second state of charge of the second battery pack is located within a sixth preset range, the first battery pack and/or the second battery pack reduce/reduces energy output by using the bidirectional voltage converter.

Optionally, the first preset range of the first state of charge of the first battery pack is greater than the third preset range of the first state of charge of the first battery pack; and the third preset range of the first state of charge of the first battery pack is greater than the fifth preset range of the first state of charge of the first battery pack; and
the sixth preset range of the second state of charge of the second battery pack is less than the second preset range and the fourth preset range of the second state of charge of the second battery pack.

Optionally, the first preset range includes one or more of the following: greater than or equal to 20%, greater than or equal to 10% and less than 20%, and greater than or equal to 5% and less than 10%;
the third preset range includes one or more of the following: greater than or equal to 5% and less than 10%, greater than or equal to 2% and less than 5%, and less than 2%;
the fifth preset range includes less than 2%; and
the sixth preset range includes less than 10%.

Optionally, the system further includes a first precharge circuit; and the first precharge circuit is connected to both the first battery pack and the first load; and the method further includes:
precharging the first load by using the first precharge circuit.

Optionally, the system further includes a second precharge circuit; and the second precharge circuit is connected to both the second battery pack and the second load; and the method further includes:
precharging the second load by using the second precharge circuit.

Optionally, the second load is a power system for the vehicle.

According to a third aspect, the present disclosure provides an electronic apparatus. The electronic apparatus includes:
a memory, storing a computer program; and
a processor, configured to execute the computer program in the memory, to implement a function of the power supply system of the vehicle according to the first aspect.

According to a fourth aspect, the present disclosure provides a control system for a vehicle. The control system of the vehicle includes the electronic apparatus according to the third aspect and/or the power supply system of the vehicle according to the first aspect.

Optionally, the electronic apparatus is respectively connected to each of the bidirectional voltage converter, the first battery pack, and the second battery pack.

According to a fifth aspect, the present disclosure provides a vehicle. The vehicle includes the power supply system of the vehicle according to the first aspect or the control system of the vehicle according to the fourth aspect.

According to the foregoing technical solution, the vehicle may be powered by using the two battery packs, and energy transmission may be further performed between the two battery packs, so that the vehicle has sufficient energy and strong power output, meeting the user requirements on the endurance range and the drive capability, and improving driving experience.

Other features and advantages of the present disclosure are described in detail in the following description of embodiments.

### BRIEF DESCRIPTION OF DRAWINGS

The accompanying drawings are intended to provide a further understanding of the present disclosure, constitute a part of this specification, and are used, together with the following description of implementations, to explain the present disclosure, but do not constitute a limitation on the present disclosure. In the accompanying drawings:
FIG. 1 is a block diagram of a power supply system for a vehicle according to an example embodiment;
FIG. 2 is a block diagram of a power supply system for a vehicle according to the example embodiment shown in FIG. 1;
FIG. 3 is a block diagram of another power supply system for a vehicle according to an example embodiment;
FIG. 4 is a flowchart of a power supply method for a vehicle according to an example embodiment;
FIG. 5 is a flowchart of a power supply method for a vehicle according to the example embodiment shown in FIG. 4;
FIG. 6 is a flowchart of another power supply method for a vehicle according to the example embodiment shown in FIG. 5;
FIG. 7 is a block diagram of an electronic apparatus according to an example embodiment;
FIG. 8 is a block diagram of a control system for a vehicle according to an example embodiment; and
FIG. 9 is a block diagram of a vehicle according to an example embodiment.

### DESCRIPTION OF EMBODIMENTS

The following describes in detail specific implementations of the present disclosure with reference to the accompanying drawings. It will be understood that the specific implementations described herein are merely used to describe and explain the present disclosure, but are not intended to limit the present disclosure.

First, an application scenario of the present disclosure is described. The present disclosure is applied to a scenario in which a load for a vehicle is powered by using a battery pack. In a related technology, a load for a vehicle is powered by using a single battery pack. For example, the battery pack may be a power battery, for example, an energy-type power battery or a power-type power battery. The load may be a high-voltage load for the vehicle, such as a power system, a DC-DC converter, an on-board charger (OBC), or a compressor.

With the development of vehicle technologies, people have higher requirements on vehicle driving experience. In one aspect, people desire a vehicle with a long endurance range. In another aspect, people desire strong drive performance of the vehicle. More importantly, people expect the vehicle to maintain optimal performance in all weather conditions. However, the energy-type power battery can only provide a long endurance range for the vehicle, and the power-type power battery can only provide strong drive performance for the vehicle. It will be understood that, powering the load by using only a single battery pack does not meet increasing driving requirements of people.

To resolve the foregoing problem, the present disclosure provides a power supply method and a power supply system for a vehicle, an electronic apparatus, a control system, and a vehicle. The power supply system includes a first load, a second load, a first battery pack, a second battery pack, and a bidirectional voltage converter. The first load is connected to the first battery pack; and the second load is connected to the second battery pack. The bidirectional voltage converter is respectively connected to the first battery pack and the second battery pack. The first battery pack is configured to supply power to the first load; and the second battery pack is configured to supply power to the second load. The bidirectional voltage converter is configured to control energy transmission between the first battery pack and the second battery pack. According to the foregoing technical solution, a vehicle may be powered by using the two battery packs, and energy transmission may be further performed between the two battery packs, so that the vehicle has sufficient energy and strong power output, meeting the user requirements on the endurance range and the drive capability, and improving driving experience.

The following describes a plurality of embodiments of the power supply system of the vehicle.

### Embodiment 1:

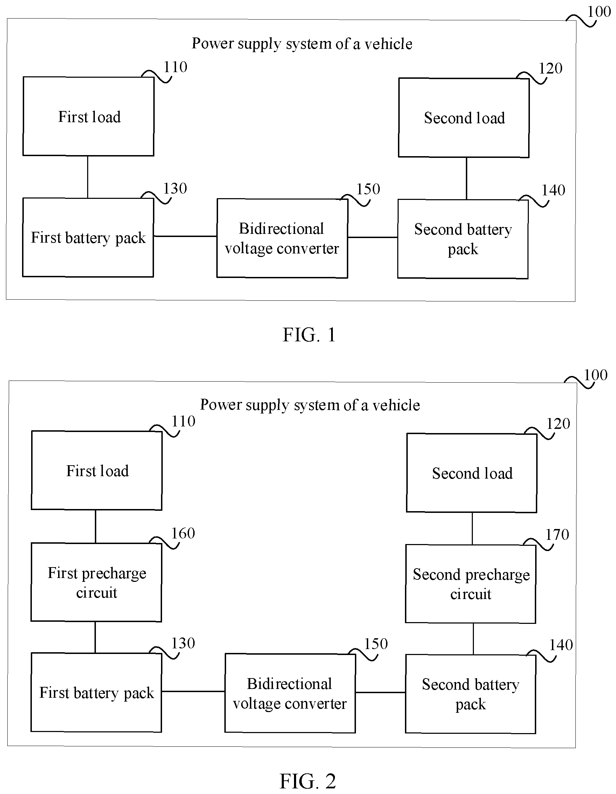

FIG. 1 is a block diagram of a power supply system of a vehicle according to an example embodiment. The power supply system 100 of the vehicle includes a first load 110, a second load 120, a first battery pack 130, a second battery pack 140, and a bidirectional voltage converter 150. The first load 110 is connected to the first battery pack 130; and the second load 120 is connected to the second battery pack 140. The bidirectional voltage converter 150 is respectively connected to the first battery pack 130 and the second battery pack 140.

The first battery pack 130 is configured to supply power to the first load 110.

The second battery pack 140 is configured to supply power to the second load 120.

The bidirectional voltage converter 150 is configured to control energy transmission between the first battery pack 130 and the second battery pack 140.

For example, the first battery pack may be an energy-type battery pack. The first load may be another high-voltage load of the vehicle, for example, a voltage converter, an on-board charger, or a compressor. The second battery pack may be a power-type battery pack. The second load may be a power system of the vehicle.

Because the power-type battery pack can provide high power output, powering a drive assembly by using the power-type battery pack allows a vehicle to have strong drive performance. Because the energy-type battery pack has a large amount of energy storage, powering another high-voltage load by using the energy-type battery pack allows a vehicle to have a long endurance range. Different loads are powered separately by using the two battery packs, so that the vehicle may have the strong drive performance and the long endurance range, thereby improving user experience. In addition, energy transmission may be further performed between the two battery packs, thereby ensuring stable driving of a vehicle and improving work efficiency.

According to the foregoing technical solution, a vehicle may be powered by using the two battery packs, and energy transmission may be further performed between the two battery packs, so that the vehicle has sufficient energy and strong power output, meeting the user requirements on the endurance range and the drive capability, and improving driving experience.

### Embodiment 2:

In some embodiments, the bidirectional voltage converter in Embodiment 1 is configured to: when a first state of charge of the first battery pack is located within a first preset range, and a second state of charge of the second battery pack is located within a second preset range, enable the first battery pack and the second battery pack to perform energy transmission in a first energy transmission direction; or when the first state of charge of the first battery pack is located within a third preset range, and the second state of charge of the second battery pack is located within a fourth preset range, enable the first battery pack and the second battery pack to perform energy transmission in a second energy transmission direction. In this way, a transmission direction may be determined based on a state of charge of a battery pack, thereby performing energy transmission.

In some other embodiments, the first energy transmission direction is a direction in which the first battery pack transmits energy to the second battery pack; and the second energy transmission direction is a direction in which the second battery pack transmits energy to the first battery pack.

For example, the bidirectional voltage converter may be controlled to work in buck mode, to transmit energy from the first battery pack to the second battery pack. Alternatively, the bidirectional voltage converter may be controlled to work in boost mode, to transmit energy from the second battery pack to the first battery pack. In this way, when one battery pack has a low state of charge, power may be supplied by using the other battery pack, implementing collaboration between the two battery packs. This improves a cruising range of a vehicle, and further enhances stability of vehicle operation.

In some embodiments, the bidirectional voltage converter is configured to: when a first state of charge of the first battery pack is located within a fifth preset range, and a second state of charge of the second battery pack is located within a sixth preset range, reduce energy output of the first battery pack and/or the second battery pack.

In some other embodiments, the first preset range of the first state of charge of the first battery pack is greater than the third preset range of the first state of charge of the first battery pack; and the third preset range of the first state of charge of the first battery pack is greater than the fifth preset range of the first state of charge of the first battery pack; and the sixth preset range of the second state of charge of the second battery pack is less than the second preset range and the fourth preset range of the second state of charge of the second battery pack.

In some embodiments, the first preset range includes one or more of the following: greater than or equal to 20%, greater than or equal to 10% and less than 20%, and greater than or equal to 5% and less than 10%; the third preset range includes one or more of the following: greater than or equal to 5% and less than 10%, greater than or equal to 2% and less than 5%, and less than 2%; the fifth preset range includes less than 2%; and the sixth preset range includes less than 10%.

It will be noted that the preset range may be set by a user based on a battery pack status parameter. This is not limited herein.

The following uses examples to describe a process of energy transmission between the first battery pack and the second battery pack. The first battery pack may be an energy pack, the second battery pack may be a power pack, the first state of charge is denoted by A, and the second state of charge is denoted by B, as shown in Table 1.

When the first preset range is A≥20%, the second preset range may include: 60%>B≥40%, or 40%>B≥10%. In this case, energy may be transmitted to the power pack by using the energy pack.

When the first preset range is 20%>A≥10%, the second preset range may include: 40%>B≥10% or B<10%. In this case, energy may be transmitted to the power pack by using the energy pack.

When the first preset range is 10%>A≥5%, the second preset range may include: B<10%. In this case, energy may be transmitted to the power pack by using the energy pack.

When the third preset range is 10%>A≥5%, the fourth preset range may include: B≥60%. In this case, energy may be transmitted to the energy pack by using the power pack.

When the third preset range is 5%>A≥2%, the fourth preset range may include: B≥60% or 60%>B≥40%. In this case, energy may be transmitted to the energy pack by using the power pack.

When the third preset range is A<2%, the fourth preset range may include one or more of the following: B≥60%, 60%>B≥40%, and 40%>B≥10%. In this case, energy may be transmitted to the energy pack by using the power pack.

When the fifth preset range is A<2%, the sixth preset range may include: B<10%. In this case, the first battery pack and/or the second battery pack reduce/reduces energy output. Because energy levels of the two battery packs are low in the foregoing case, there is no need to perform energy transmission, and a vehicle would be controlled to enter a restricted driving state, thereby protecting operation safety of the vehicle.

It will be noted that there is no need to perform energy transmission in the following several cases:
The first preset range is A≥20%, and the second preset range is B≥60%; the first preset range is 20%>A≥10%, the second preset range is B≥60% or 60%>B≥40%; the first preset range is 10%>A≥5%, and the second preset range is 60%>B≥40%, or 40%>B≥10%; the third preset range is 5%>A≥2%, and the fourth preset range is 40%>B≥10% or B<10%. In the foregoing several cases, one of the two battery packs can provide energy for a corresponding load, and therefore there is no need to perform energy transmission.

**Table 1:**

| Energy pack | Power pack | Energy transfer direction |
|---|---|---|
| A≥20% | B≥60% | None |
| | 60%>B≥40% | Energy pack → power pack |
| | 40%>B≥10% | |
| | B<10% | |
| 20%>A≥10% | B≥60% | None |
| | 60%>B≥40% | |
| | 40%>B≥10% | Energy pack → power pack |
| | B<10% | |
| 10%>A≥5% | B≥60% | Power pack → energy pack |
| | 60%>B≥40% | None |
| | 40%>B≥10% | |
| | B<10% | Energy pack → power pack |
| 5%>A≥2% | B≥60% | Power pack → energy pack |
| | 60%>B≥40% | |
| | 40%>B≥10% | None |
| | B<10% | |
| A<2% | B≥60% | Power pack → energy pack |
| | 60%>B≥40% | |
| | 40%>B≥10% | |
| | B<10% | None, restricted driving |

In some embodiments, the bidirectional voltage converter may be configured to: when determining that the first state of charge is located within a first target state of charge range, determine a second target state of charge range within which the second state of charge is located; and determine the energy transmission direction based on the first target state of charge range and the second target state of charge range; alternatively, when determining that the second state of charge is located within the second target state of charge range, determine the first target state of charge range within which the first state of charge is located; and determine the energy transmission direction based on the second target state of charge range and the first target state of charge range. In this case, the energy transmission direction may be determined by using the state of charge ranges of the two battery packs. This is applicable to more application scenarios and improves work efficiency.

In some other embodiments, determining the first target state of charge range within which the first state of charge is located may include: determining the first target state of charge range from a plurality of first preset state of charge ranges based on the first state of charge; and determining the second target state of charge range within which the second state of charge is located may include: determining the second target state of charge range from a plurality of second preset state of charge ranges based on the second state of charge.

For example, the first preset state of charge range and the second preset state of charge range may be set by the user based on a model and a use condition of a battery. This is not limited herein. In this way, a target state of charge range of a battery pack may be quickly determined by using a plurality of preset state of charge ranges, thereby improving work efficiency.

In some embodiments, alternatively, when it is determined that the first state of charge is less than or equal to a first preset state of charge threshold, and the second state of charge is less than or equal to a second preset state of charge threshold, the vehicle may be controlled to enter a restricted driving state.

For example, the first preset state of charge threshold may be located within a range from 0% to 15%, for example, 1%, 5%, 10%, or 15%. The second preset state of charge threshold may be within a range of 0% to 5%, for example, 1%, 2%, or 5%. This is not limited herein.

It will be noted that, alternatively, when it is determined that the first state of charge is greater than or equal to a third preset state of charge threshold, and the second state of charge is greater than or equal to a fourth preset state of charge threshold, it may be determined that states of charge of the battery packs of the vehicle are sufficient, and there is no need to perform energy transmission.

For example, the third preset state of charge threshold may be within a range of 55% to 75%, for example, 55%, 60%, or 75%. The fourth preset state of charge threshold may be within a range of 5% to 100%, for example, 5%, 10%, 20%, 50%, or 100%. This is not limited herein.

In some embodiments, this system may alternatively implement a function of the power supply system of the vehicle by using an electronic apparatus. For example, the electronic apparatus may be a controller, and the controller may be an independent apparatus, or may be another apparatus integrated into a vehicle. For example, the controller may be a vehicle control unit VCU, or a micro controller unit MCU. This is not limited herein.

### Embodiment 3:

FIG. 2 is a block diagram of a power supply system for a vehicle according to the example embodiment shown in FIG. 1. As shown in FIG. 2, the system 100 may further include a first precharge circuit 160. The first precharge circuit 160 is connected to both the first battery pack 130 and the first load 110. The first precharge circuit 160 is configured to precharge the first load 110.

For example, the first precharge circuit may precharge the first load before the first battery pack and the second battery pack of the vehicle perform energy transmission (that is, after the vehicle enters a power-on state), to protect the first load. The first precharge circuit may be a high-voltage precharge circuit. The first precharge circuit may limit a charging current applied to a capacitor at a moment when a power supply is turned on, thereby protecting another component of a circuit from being damaged by an instantaneous short-circuit current of the capacitor.

In some embodiments, as shown in FIG. 2, the system 100 may further include a second precharge circuit 170. The second precharge circuit 170 is connected to both the second battery pack 140 and the second load 120. The second precharge circuit 170 is configured to precharge the second load 120. For example, the second precharge circuit may be a high-voltage precharge circuit. The second precharge circuit may precharge the second load before the first battery pack and the second battery pack of the vehicle perform energy transmission (that is, after a vehicle enters the power-on state), to protect the second load.

It will be noted that the system 100 may include the first precharge circuit 160 or the second precharge circuit 170, or may include both the first precharge circuit 160 and the second precharge circuit 170. This is not limited herein.

In some embodiments, the system 100 may further include a direct current charging interface. The direct current charging interface may be connected to both the first battery pack and the second battery pack. The direct current charging interface is used to connect to the power supply. In this way, the vehicle may be charged by connecting the direct current charging interface to a charging pile when a battery pack has a low state of charge.

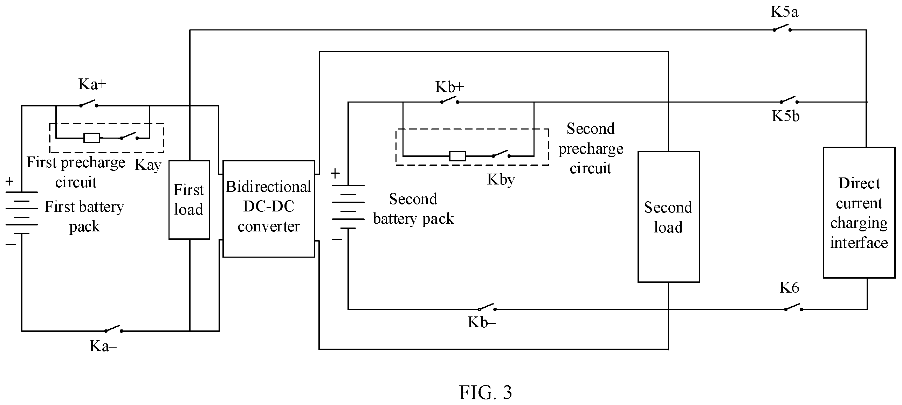

FIG. 3 is a block diagram of another power supply system of a vehicle according to an example embodiment. As shown in FIG. 3, the system may include a first load, a second load, a first battery pack, a second battery pack, a bidirectional voltage converter, a first precharge circuit, a second precharge circuit, a direct current charging interface, and a plurality of contactors. The following describes a working procedure of the power supply system by using an example.

When a vehicle enters a power-on state, the first precharge circuit precharges the first load, and after the precharging is completed, contactors Ka- and Ka+ are closed, supplying power to the first load by using the first battery pack. The second precharge circuit precharges the second load, contactors Kb- and Kb+ are closed, supplying power to the second load by using the second battery pack. When it is determined that a vehicle is not faulty, the vehicle can controlled to enter a driving state. In this case, energy transmission between the first battery pack and the second battery pack may be controlled via the bidirectional voltage converter based on a first state of charge of the first battery pack and a second state of charge of the second battery pack. In addition, when the first battery pack and the second battery pack have low states of charge, the vehicle can be controlled to enter a restricted driving state, so that the charging pile may be connected to the direct current charging interface for charging.

According to the foregoing technical solution, the vehicle may be powered by using the two battery packs, and energy transmission may be further performed between the two battery packs, so that the vehicle has sufficient energy and strong power output, meeting the user requirements on the endurance range and the drive capability, and improving driving experience.

### Embodiment 4:

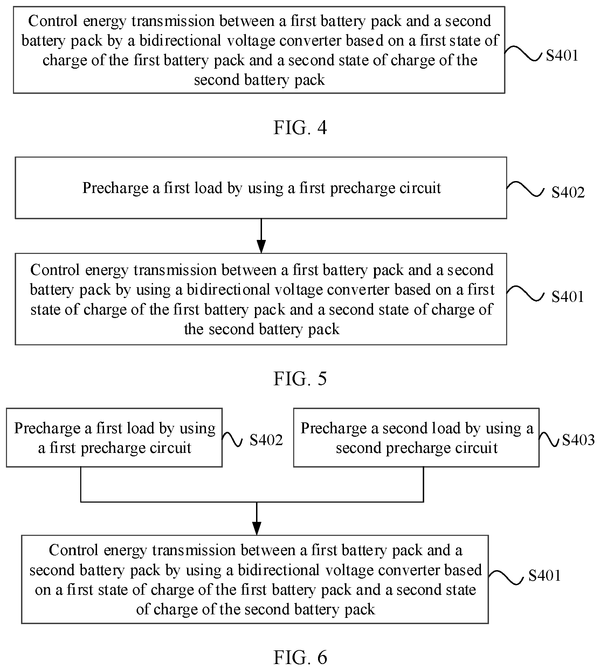

FIG. 4 is a flowchart of a vehicle control method according to an example embodiment. As shown in FIG. 4, the method is applied to a vehicle control system. The system includes a first load, a second load, a first battery pack, a second battery pack, and a bidirectional voltage converter. The first load is connected to the first battery pack; and the second load is connected to the second battery pack. The bidirectional voltage converter is respectively connected to the first battery pack and the second battery pack. The method may include:
S401: control energy transmission between the first battery pack and the second battery pack via the bidirectional voltage converter based on a first state of charge of the first battery pack and a second state of charge of the second battery pack.

The first battery pack is configured to supply power to the first load; and the second battery pack is configured to supply power to the second load.

According to the foregoing technical solution, the vehicle may be powered by using the two battery packs, and energy transmission may be further performed between the two battery packs, so that the vehicle has sufficient energy and strong power output, meeting the user requirements on the endurance range and the drive capability, and improving driving experience.

Optionally, the controlling energy transmission between the first battery pack and the second battery pack via the bidirectional voltage converter includes:

When the first state of charge of the first battery pack is located within a first preset range, and the second state of charge of the second battery pack is located within a second preset range, the first battery pack and the second battery pack are enabled, by using the bidirectional voltage converter, to perform energy transmission in a first energy transmission direction; or
when the first state of charge of the first battery pack is located within a third preset range, and the second state of charge of the second battery pack is located within a fourth preset range, the first battery pack and the second battery pack are enabled to perform energy transmission in a second energy transmission direction.

Optionally, the first energy transmission direction is a direction in which the first battery pack transmits energy to the second battery pack; and the second energy transmission direction is a direction in which the second battery pack transmits energy to the first battery pack.

Optionally, the controlling energy transmission between the first battery pack and the second battery pack via the bidirectional voltage converter includes:
When the first state of charge of the first battery pack is located within a fifth preset range, and the second state of charge of the second battery pack is located within a sixth preset range, the first battery pack and/or the second battery pack reduce/reduces energy output by using the bidirectional voltage converter.

Optionally, the first preset range of the first state of charge of the first battery pack is greater than the third preset range of the first state of charge of the first battery pack; and the third preset range of the first state of charge of the first battery pack is greater than the fifth preset range of the first state of charge of the first battery pack; and
the sixth preset range of the second state of charge of the second battery pack is less than the second preset range and the fourth preset range of the second state of charge of the second battery pack.

Optionally, the first preset range includes one or more of the following: greater than or equal to 20%, greater than or equal to 10% and less than 20%, and greater than or equal to 5% and less than 10%;
the third preset range includes one or more of the following: greater than or equal to 5% and less than 10%, greater than or equal to 2% and less than 5%, and less than 2%;
the fifth preset range includes less than 2%; and
the sixth preset range includes less than 10%.

FIG. 5 is a flowchart of a vehicle control method according to an example embodiment. As shown in FIG. 5, the system further includes a first precharge circuit. The first precharge circuit is connected to both the first battery pack and the first load. The method may further include:
S402: precharge the first load by using the first precharge circuit.

The foregoing step S402 may be precharging the first load by using the first precharge circuit before the first battery pack and the second battery pack of the vehicle perform energy transmission (that is, after the vehicle enters the power-on state), to ensure that the first load is not damaged by a short-duration high current.

FIG. 6 is a flowchart of a vehicle control method according to an example embodiment. As shown in FIG. 6, the system further includes a second precharge circuit. The second precharge circuit is connected to both the second battery pack and the second load. The method may further include:
S403: precharge the second load by using the second precharge circuit.

Optionally, the second load is a power system of the vehicle.

The foregoing step S403 may be precharging the second load by using the second precharge circuit before the first battery pack and the second battery pack of a vehicle perform energy transmission (that is, after the vehicle enters the power-on state), to ensure that the second load is not damaged by a short-duration high current.

It will be noted that step S402 may be performed before step S403, or step S403 may be performed before step S402, or step S402 and step S403 are performed simultaneously. This is not limited herein.

### Embodiment 5:

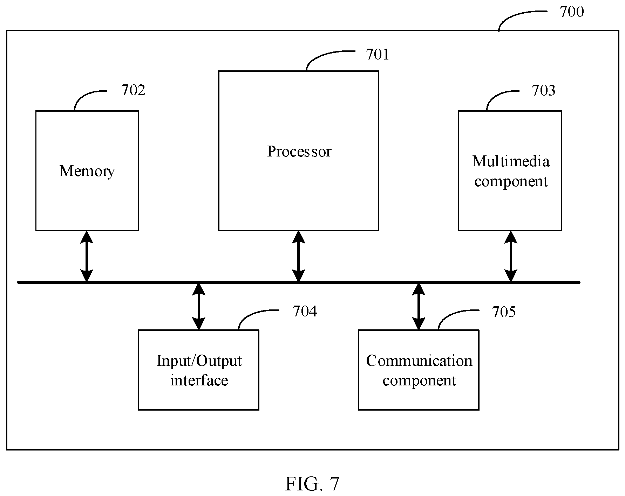

FIG. 7 is a block diagram of an electronic apparatus according to an example embodiment. The electronic apparatus 700 may perform a function of the power supply system of a vehicle. As shown in FIG. 7, the electronic apparatus 700 may include a processor 701, and a memory 702. The electronic apparatus 700 may further include one or more of the following: a multimedia component 703, an input/output interface 704, and a communication component 705.

The processor 701 is configured to control an overall operation on the electronic apparatus 700, to complete all or some of the foregoing steps. The memory 702 is configured to store various types of data to support operations on the electronic apparatus 700. The data may include, for example, instructions used for any application or method to operate on the electronic apparatus 700, and application-related data, such as contact data, a sent and received message, a picture, audio, or video. The memory 702 may be implemented by any type of volatile or nonvolatile storage device or a combination thereof, for example, a static random access memory (SRAM for short), an electrically erasable programmable read-only memory (EEPROM for short), an erasable programmable read-only memory (EPROM for short), a programmable read-only memory (PROM for short), a read-only memory (ROM for short), a magnetic memory, a flash memory, a magnetic disk, or an optical disc. The multimedia component 703 may include a display and an audio component. The display may be, for example, a touchscreen, and the audio component is configured to output and/or input an audio signal. For example, the audio component may include one microphone that is configured to receive an external audio signal. The received audio signal may be further stored in the memory 702 or sent through the communication component 705. The audio component further includes at least one speaker that is configured to output an audio signal. The input/output interface 704 provides an interface between the processor 701 and other interface modules. The other interface modules may be keyboards, mice, buttons, or the like. These buttons may be virtual or physical buttons. The communication component 705 is configured to perform wired or wireless communication between the electronic apparatus 700 and another device. For example, wireless communication is Wi-Fi, Bluetooth, near field communication (NFC for short), 2G, 3G, 4G, NB-IoT, eMTC, or other 5G, or one or a combination thereof. This is not limited herein. Therefore, correspondingly, the communication component 705 may include: a Wi-Fi module, a Bluetooth module, an NFC module, and the like.

In an example embodiment, the electronic apparatus 700 may be implemented by one or more of the following: an application-specific integrated circuit (ASIC for short), a digital signal processor (DSP for short), a digital signal processing device (DSPD for short), a programmable logic device (PLD for short), a field programmable gate array (FPGA for short), a controller, a microcontroller, a microprocessor, or another electronic component, and is configured to implement a function of the power supply system of the vehicle.

### Embodiment 6:

In another example embodiment, a computer-readable storage medium including program instructions is further provided. When the program instructions are executed by the processor, a function of the power supply system for the vehicle is implemented. For example, the computer-readable storage medium may be the memory 702 including the program instructions, and the program instructions may be executed by the processor 701 of the electronic apparatus 700 to implement a function of the power supply system of the vehicle.

### Embodiment 7:

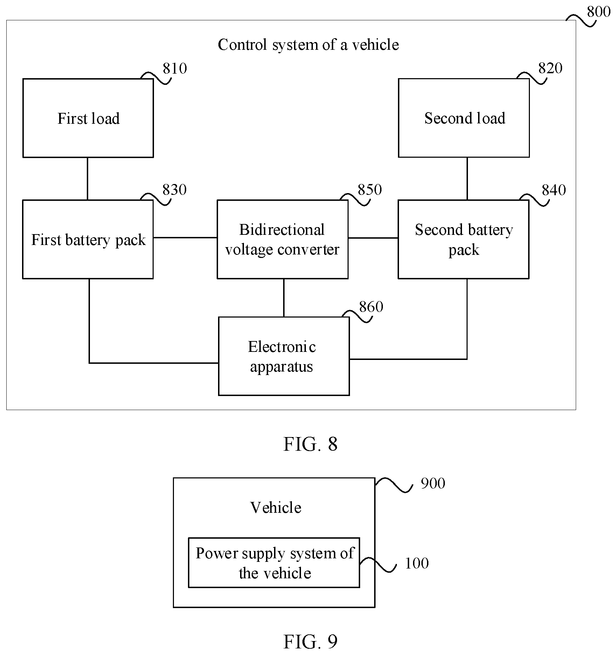

FIG. 8 is a block diagram of a control system for a vehicle according to an example embodiment. As shown in FIG. 8, the system 800 may include a first load 810, a second load 820, a first battery pack 830, a second battery pack 840, a bidirectional voltage converter 850, and an electronic apparatus 860. The first load 810 is connected to the first battery pack 830. The second load 820 is connected to the second battery pack 840. The bidirectional voltage converter 850 is respectively connected to the first battery pack 830 and the second battery pack 840. The electronic apparatus 860 is respectively connected to each of the bidirectional voltage converter 850, the first battery pack 830, and the second battery pack 840.

### Embodiment 8:

FIG. 9 is a block diagram of a vehicle according to an example embodiment. As shown in FIG. 9, the vehicle 900 may include the power supply system 100 of the vehicle or the control system 800 of the vehicle.

In conclusion, the present disclosure provides a power supply method and a power supply system of a vehicle, an electronic apparatus, a control system, and a vehicle. The power supply system includes a first load, a second load, a first battery pack, a second battery pack, and a bidirectional voltage converter. The first load is connected to the first battery pack; and the second load is connected to the second battery pack. The bidirectional voltage converter is respectively connected to the first battery pack and the second battery pack. The first battery pack is configured to supply power to the first load; and the second battery pack is configured to supply power to the second load. The bidirectional voltage converter is configured to control energy transmission between the first battery pack and the second battery pack. According to the foregoing technical solution, the vehicle may be powered by using the two battery packs, and energy transmission may be further performed between the two battery packs, so that the vehicle has sufficient energy and strong power output, meeting the user requirements on the endurance range and the drive capability, and improving driving experience.

The foregoing describes preferred implementations of the present disclosure in detail with reference to the accompanying drawings. However, the present disclosure is not limited to specific details in the foregoing implementations. Within the technical concept scope of the present disclosure, a plurality of simple variations may be made to the technical solutions of the present disclosure, and all these simple variations fall within the protection scope of the present disclosure.

In addition, it will be noted that the specific technical features described in the foregoing specific implementations may be combined in any appropriate manner when there is no contradiction. To avoid unnecessary repetition, various possible combination manners are not separately described in this disclosure.
In addition, different implementations of the present disclosure may be randomly combined, and will also be considered as disclosed in the present disclosure provided that such combinations do not depart from the idea of the present disclosure.

## Claims

1. A power supply system (100) for a vehicle, the power supply system (100) comprising a first load (110), a second load (120), a first battery pack (130), a second battery pack (140), and a bidirectional voltage converter (150); the first load (110) being connected to the first battery pack (130); the second load (120) being connected to the second battery pack (140); and the bidirectional voltage converter (150) being respectively connected to the first battery pack (130) and the second battery pack (140);
the first battery pack (130) being configured to supply power to the first load (110);
the second battery pack (140) being configured to supply power to the second load (120); and
the bidirectional voltage converter (150) being configured to control energy transmission between the first battery pack (130) and the second battery pack (140).

2. The power supply system (100) according to claim 1, the bidirectional voltage converter (150) being configured to:
when a first state of charge of the first battery pack (130) is located within a first preset range, and a second state of charge of the second battery pack (140) is located within a second preset range, enable the first battery pack (130) and the second battery pack (140) to perform energy transmission in a first energy transmission direction; or
when the first state of charge of the first battery pack (130) is located within a third preset range, and the second state of charge of the second battery pack (140) is located within a fourth preset range, enable the first battery pack (130) and the second battery pack (140) to perform energy transmission in a second energy transmission direction.

3. The power supply system (100) according to claim 2, the first energy transmission direction being a direction in which the first battery pack (130) transmits energy to the second battery pack (140); and the second energy transmission direction being a direction in which the second battery pack (140) transmits energy to the first battery pack (130).

4. The power supply system (100) according to claim 1,
when a first state of charge of the first battery pack (130) is located within a fifth preset range, and a second state of charge of the second battery pack (140) is located within a sixth preset range, the first battery pack (130) and/or the second battery pack (140) reducing energy output.

5. The power supply system (100) according to any one of claims 1 to 4,
the first preset range of the first state of charge of the first battery pack (130) being greater than the third preset range of the first state of charge of the first battery pack (130); and the third preset range of the first state of charge of the first battery pack (130) being greater than the fifth preset range of the first state of charge of the first battery pack (130); and
the sixth preset range of the second state of charge of the second battery pack (140) being less than the second preset range and the fourth preset range of the second state of charge of the second battery pack (140).

6. The power supply system (100) according to claim 5,
the first preset range comprising one or more of the following: greater than or equal to 20%, greater than or equal to 10% and less than 20%, and greater than or equal to 5% and less than 10%;
the third preset range comprising one or more of the following: greater than or equal to 5% and less than 10%, greater than or equal to 2% and less than 5%, and less than 2%;
the fifth preset range comprising less than 2%; and
the sixth preset range comprising less than 10%.

7. The power supply system (100) according to claim 1,
the power supply system further comprising a first precharge circuit (160); and the first precharge circuit (160) being connected to both the first battery pack (130) and the first load (110); and
the first precharge circuit (160) being configured to precharge the first load (110); and/or,
the power supply system further comprising a second precharge circuit (170); and the second precharge circuit (170) being connected to both the second battery pack (140) and the second load (120); and
the second precharge circuit (170) being configured to precharge the second load (120).

8. The power supply system (100) according to claim 1, wherein the second load (120) is a power system of the vehicle.

9. A power supply method for a vehicle, wherein the power supply method for the vehicle is applied to a power supply system for a vehicle, the system comprises a first load, a second load, a first battery pack, a second battery pack, and a bidirectional voltage converter; the first load is connected to the first battery pack; the second load is connected to the second battery pack; the bidirectional voltage converter is connected to both the first battery pack and the second battery pack; and the method comprises:
controlling energy transmission between the first battery pack and the second battery pack based on a first state of charge of the first battery pack and a second state of charge of the second battery pack via the bidirectional voltage converter, wherein the first battery pack is configured to supply power to the first load, and the second battery pack is configured to supply power to the second load.

10. An electronic apparatus, comprising:
a memory, storing a computer program; and
a processor, configured to execute the computer program in the memory, to implement a function of the power supply system of the vehicle according to any one of claims 1 to 8.

11. A control system (800) of a vehicle, comprising the electronic apparatus (860) according to claim 10, and/or comprising the power supply system (100) of the vehicle according to any one of claims 1 to 8.

12. The control system (800) according to claim 11, wherein the electronic apparatus (860) is respectively electrically connected to each of the bidirectional voltage converter (850), the first battery pack (830), and the second battery pack (840).

13. A vehicle comprising the power supply system (100) for a vehicle according to any one of claims 1 to 8 or the control system (800) for a vehicle according to any one of claims 11 and 12.
